# EUROPÄISCHE PATENTSCHRIFT

(11) **EP 0 420 320 B1**
(45) Veröffentlichungstag und Bekanntmachung des Hinweises auf die Patenterteilung: **25.01.1995**
(21) Anmeldenummer: 90202451.2
(22) Anmeldetag: 17.09.1990
(51) Int. Cl.: H04N 5/08

(54) **Digitale Schaltungsanordnung zur Detektion von Synchronisationsimpulsen**
Digital circuit device for detecting synchronizing pulses
Arrangement de circuit numérique de détection des impulsions de synchronisation

(30) Priorität: 23.09.1989 DE 3931861
(43) Veröffentlichungstag der Anmeldung: 03.04.1991
(73) Patentinhaber: Philips Patentverwaltung GmbH, 22335 Hamburg (DE); Philips Electronics N.V., 5621 BA Eindhoven (NL)
(72) Erfinder: Pletz-Kirsch, Gerhard, D-2000 Hamburg 62 (DE)
(74) Vertreter: von Laue, Hanns-Ulrich, Dipl.-Ing.

(56) Entgegenhaltungen:
- US-A- 4 468 625
- US-A- 4 697 211

## Beschreibung

Die Erfindung betrifft eine digitale Schaltungsanordnung zur Detektion von in einem digitalen Fernsehsignal enthaltenen Horizontal- oder Vertikal-Synchronisations-Impulsen.

Bekannte Schaltungsanordnungen für die Abtrennung von Horizontal- oder Vertikal-Synchronisations-Impulsen aus Fernsehsignalen verwenden eine Abtrennschaltung für die Horizontal- bzw. Vertikal-Synchron-Impulse und vergleichen diese mit einem aus der Impulsamplitude gewonnenen Schneidepegel. Dieser Schneidepegel ist jedoch immer eine, nach welchen Kriterien auch immer, gemittelte Amplitude des Fernsehsignals. Dadurch ergeben sich erhebliche Probleme bei gestörten Eingangssignalen, bei denen eine einwandfreie Erkennung der Synchronisations-Impulse dann nicht mehr möglich ist.

Aus der europäischen Patentanmeldung EP-A-0 244 239 ist eine Abtrennschaltung für Synchronisations-Impulse bekannt, bei der die Flanken der Synchronisations-Impulse detektiert werden. Das dabei gewonnene Signal wird benutzt um einen Schneidepegel zu generieren. Um die Flanke der Impulse in dem Fernsehsignal zu detektieren, sind Annahmen über deren Flankensteilheit notwendig. Wenn diese Kriterien nicht mehr erreicht werden, nämlich z.B. bei gestörtem Signal, wird entweder kein Synchronisaticns-Impuls detektiert oder es kann zu falschen Detektionen kommen.

Es ist Aufgabe der Erfindung, eine Schaltungsanordnung zur Detektion von Synchronisations-Impulsen in einem Fernsehsignal zu schaffen, welche auch bei gestörtem Fernsehsignal eine sichere Erkennung der Impulse gewährleistet.

Diese Aufgabe ist erfindungsgemäß dadurch gelöst, daß das digitale Fernsehsignal einem Pegel-Detektor zugeführt ist, welcher ein Extremwert-Signal abgibt, das laufend denjenigen, bisher in einem Zeitintervall, dessen Dauer dem zeitlichen Abstand zweier aufeinanderfolgender Synchronisations-Impulse entspricht, aufgetretenen Extremwert des Fernsehsignals liefert, der am Ende des Zeitintervalls den Pegel des Synchronisations-Impulses angibt, daß in jedem Zeitraum zwischen aufeinanderfolgenden Synchronisations-Impulsen zu einem vorgebbaren Zeitpunkt außerhalb der Austastlücke ein neues Zeitintervall gestartet wird und daß das Extremwert-Signal zur Erzeugung eines Vergleichssignals laufend um einen vorgebbaren Anteil verringert wird und einem Komparator zugeführt ist, welcher während derjenigen Zeiten, in denen der Pegel des um einige Abtastwerte verzögerten Fernsehsignals größer ist als der Pegel des Vergleichssignals, ein Synchronisations-Signal abgibt.

Der Pegel-Detektor prüft in einem Zeitintervall laufend den Pegel des Fernsehsignals und stellt denjenigen Extremwert des Signals fest, der am Ende des Zeitintervalls den Pegel des Synchronisations-Impulses angibt. Bei nicht-invertiertem Fernsehsignal sind also die Minima des Fernsehsignals zu berücksichtigten. Liegt das Fernsehsignal jedoch in invertierter Form vor, so sind die Maxima diejenigen Extremwerte, in denen die Synchronisations-Impulse auftauchen. Der Pegeldetektor liefert nun laufend ein Extremwertsignal, welches den bisher in einem Zeitintervall aufgetretenen Extremwert angibt. Es ist damit zu jeder Zeit bekannt, welcher Extremwert in dem gerade ablaufenden Zeitintervall bisher aufgetreten ist.

Die Zeitintervalle weisen für eine Horizontal-Synchronisation die Dauer einer Bildzeile und für eine Vertikal-Synchronisation die eines Halbbildes auf, werden jedoch nicht zu deren Beginn gestartet, sondern zu einem Zeitpunkt außerhalb der Austastlücke des Fernsehsignals. Dieser Zeitpunkt ist vorgebbar und ist in jeder Bildzeile identisch.

Es wird ein Vergleichssignal erzeugt, welches das Extremwertsignal ist, das jedoch um einen vorgebbaren Anteil verringert ist. Dieses Extremwertsignal ist einem Komparator zugeführt. Der Komparator vergleicht nun dieses Extremwertsignal mit dem Fernsehsignal, das jedoch um einige Abtasttakte verzögert ist. In denjenigen Zeiten, in denen der Pegel des verzögerten Fernsehsignals größer ist als der Pegel des Vergleichssignals, wird ein Synchronisations-Signal erzeugt. Dieses Synchronisations-Signal wird dann im Regelfalle einem der digitalen Schaltungsanordnug nachgeschalteten Phasenregelkreis zugeführt sein.

Die Schaltungsanordnung weist vor allem den Vorteil auf, daß für jede Synchronisationsperiode getrennt der Extremwert des Pegels festgestellt wird, so daß das Signal nicht gemittelt werden muß und die sich aus einer Mittlung ergebenden Fehler entfallen. Insbesondere bei gestörtem Fernsehsignal ist auf diese Weise eine deutlich sicherere Erkennung der Synchronisationsimpulse gegeben. So wird z.B. bei zu kleinem Pegel der Synchronisations-Impulse, auch wenn nur einige Synchronisationsimpulse einen zu kleinen Pegel haben, für jede Austastlücke getrennt, der maximale Pegel festgestellt und auf diese Weise die Synchronisations-Impulse erkannt, wobei unterstellt wird, daß die Synchronisationsimpulse den minimalen bzw. maximalen Pegel in einer Austastlücke haben.

Bei dieser Schaltungsanordnung kann auf eine Abtrennschaltung und eine gemittelte Amplitudenmessung völlig verzichtet werden. Es werden vielmehr die Extremwerte des gesamten Fernsehsignals festgestellt, wobei je nachdem, ob das Fernsehsignal in nicht-invertierter oder invertierter Form vorliegt, die Minima oder Maxima des Signals zu berücksichtigen sind.

Nach einer weiteren Ausgestaltung der Erfindung ist vorgesehen, daß dem Pegeldetektor ein Tiefpaß-Filter vorgeschaltet ist. Insbesondere bei verrauschtem Fernsehsignal ist es vorteilhaft, ein solches Tiefpaß-Filter vorzusehen, damit der detektierte Extremwert des Signals nicht von einzelnen Rauschimpulsen bestimmt wird.

Nach einer weiteren Ausgestaltung der Erfindung ist vorgesehen, daß der vorgebbare Anteil, um den das Extremwert-Signal zur Gewinnung des Vergleichssignal verringert wird 1/8 bis 1/32, vorzugsweise 1/16, beträgt.

Es hat sich als vorteilhaft erwiesen, zur Erzeugung des Vergleichssignals das Extremwertsignal um einen Anteil von 1/16 zu verringern, da bei diesem Wert einerseits Störimpulse im Regelfalle noch nicht bemerkbar machen, andererseits jedoch eine ausreichende Pegeldifferenz vorhanden ist, um in dem Komparator beim Vergleich des Vergleichssignals und des um einige Abtasttakte verzögerten Fernsehsignals sicher zu den Zeiten die gewünschte Pegeldifferenz zu erhalten, in denen das Fernsehsignal Synchronisations-Impulse enthält.

Nach einer weiteren Ausgestaltung der Erfindung ist vorgesehen, daß die Zeitintervalle jeweils gegen Ende des aktiven, den Bildinhalt enthaltenden Teils jeder Bildzeile gestartet werden. Auf diese Weise ist von dem Zeitpunkt des Beginns des Zeitintervalls bis zu dem Auftreten eines Synchronisationsimpulses möglichst wenig Bildinhalt in dem Fernsehsignal enthalten, welcher in Extremfällen eventuell einen so niedrigen Pegel aufweisen kann, daß eine sichere Erkennung der Synchronisations-Impulse nicht mehr möglich ist.

Nach einer weiteren Ausgestaltung der Erfindung ist vorgesehen, daß der Start der Zeitintervalle mittels eines Zählers vorgenommen wird, welcher in einem der Schaltungsanordnung nachgeschalteten digitalen Phasenregelkreis vorgesehen ist.

Ist der Schaltungsanordnung ein digitaler Phasenregelkreis nachgeschaltet, so ist in diesem üblicherweise ein Zähler vorgesehen, der im synchronisierten Zustand des Phasenregelkreises zu jedem Zeitpunkt einer Bildzeile bzw. eines Bildes einen definierten Zählerstand liefert. Es kann also zu jedem gewünschten Zeitpunkt ein dann vorliegender, definierter Zählerstand des Zählers detektiert werden und zur Erzeugung eines Signals für den Start der Zeitintervalle herangezogen werden.

Nach einer weiteren Ausgestaltung der Erfindung ist vorgesehen, daß das dem Komparator zugeführte Fernsehsignal um 10 bis 30, vorzugsweise 20 Abtasttakte des Fernsehsignals verzögert ist.

Das dem Komparator zum Vergleich mit dem Vergleichssignal zugeführte Fernsehsignal ist vorteilhafterweise um etwa 20 Abtasttakte verzögert, da auf diese Weise einerseits ausreichend Zeit verstrichen ist, um festzustellen, ob nicht doch noch ein höherer Extremwert des Signals auftaucht, und andererseits noch keine zu große Verzögerung des erzeugten Synchronisations-Signals gegenüber den Synchronisations-Impulsen auftritt.

Anhand der Zeichnungen wird ein Ausführungsbeispiel der Erfindung näher erläutert. Es zeigen:
Fig. 1 ein Prinzipschaltbild einer digitalen Schaltungsanordnung zur Detektion von Horizontal-Synchronisations-Impulsen und
Fig. 2 den zeitlichen Verlauf verschiedener Signale in der in Fig. 1 dargestellten Schaltungsanordnung.

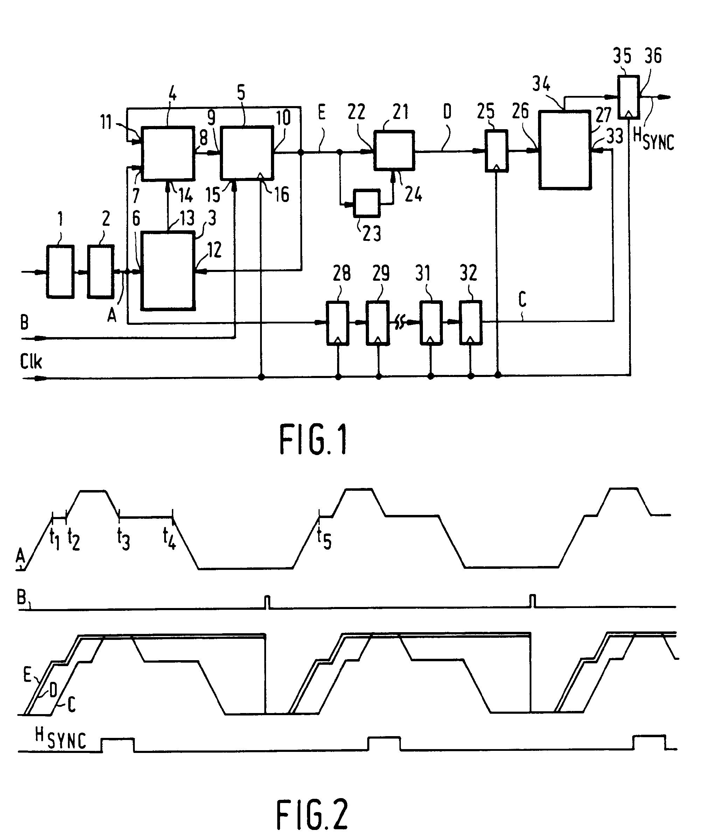

Fig. 1 zeigt eine digitale Schaltungsanordnung zur Detektion von Horizontal-Synchronisations-Impulsen, welche in einem digitalen Fernsehsignal enthalten sind. Der eigentlichen Schaltungsanordnung zur Detektion sind ein Tiefpaß-Filter 1 und ein Inverter 2 vorgeschaltet. Dem Tiefpaß-Filter 1 ist ein Fernsehsignal zugeführt, welches Synchronisations-Impulse enthält. Das gefilterte Fernsehsignal wird in dem Inverter 2 invertiert. Das gefilterte und invertierte Fernsehsignal ist dann einem Pegel-Detektor zugeführt, welcher Bestandteil der digitalen Schaltungsanordnung zur Detektion der Synchronisations-Impulse ist. Der Pegeldetektor ist aus einem Komparator 3, einem Multiplexer 4 und einem Register 5 aufgebaut. Einem ersten Eingang 6 des Komparators 3 ist das Ausgangssignal des Inverters 2, also das gefilterte, invertierte Fernsehsignal zugeführt. Dieses Fernsehsignal ist ferner auf einen ersten Eingang 7 eines Multiplexers 4 geführt. Ein Ausgang 8 des Mulitplexers 4 ist mit einem Eingang 9 des Registers 5 verbunden, dessen Ausgang 10 mit einem zweiten Eingang 11 des Mulitplexers 4 sowie mit einem zweiten Eingang 12 des Komparators 3 verbunden ist. Ein an einem Ausgang 13 des Komparators 3 anliegendes Schaltsignal ist einem Schalteingang 14 des Mulitplexers 4 zugeführt. Einem Eingang 15 des Registers 5 ist ein Schaltsignal B zugeführt, welches der Rücksetzung des Registers dient. Einem Eingang 16 des Registers 5 ist ein Taktsignal Clk zugeführt, welches den Abtasttakt des digitalen Fernsehsignals darstellt.

Das am Ausgang 10 des Regsiters 5 anliegende Signal ist ferner einem ersten Eingang 22 eines Addierers 21 zugeführt. Dieses Signal, das ja ein digitales Fernsehsignal mit mehreren Bits darstellt, ist mit einigen der höherwertigen Bits einem Inverter 23 zugeführt, dessen Ausgangssignal auf einen zweiten Eingang 24 des Addierers 21 geführt ist. Die übrigen Bitstellen sind an dem Eingang 24 auf einen festen Pegel gelegt, so daß mittels des Addierers 21 und des Inverters 23 ein Anteil von dem am Ausgang 10 des Registers 5 erscheinenden Extremwertsignals abgezogen wird. Werden beispielsweise die 12 höchstwertigen Bits eines Signals mit 16 Bits mittels des Inverters 23 invertiert und auf den zweiten Eingang des Addierers 24 geführt und sind die übrigen vier niedrigstwertigen Bits an dem Eingang 24 des Inverters auf High-Pegel gesetzt, so ist das Ausgangssignal des Addierers 21 um 1/16 gegenüber dessen Eingangssignal verringert.

Dem Addierer 21 ist ein Register 25 nachgeschaltet, das mittels des Taktsignals Clk getaktet ist. Das Ausgangssignal des Registers 25 ist auf einen ersten Eingang 26 eines Komparators 27 geführt.

Das am Ausgang des Inverters 2 erscheinende, gefilterte invertierte digitale Fernsehsignal ist einer Registerkette aus mehreren in Reihe geschalteten Registern 28, 29, 31 und 32 zugeführt. Das Ausgangssignal des letzten dieser Register ist dann einem zweiten Eingang 33 des Komparators 27 zugeführt. In dem Komparator 27 wird das Vergleichssignal, das von dem Register 25 geliefert wird, und daß Fernsehsignal, das mittels der Registerkette 28, 29, 31 und 32 verzögert ist, verglichen. In der Figur 1 sind aus Platzgründen exemplarisch nur vier Register 28 bis 32 dargestellt, in einer tatsächlichen Realisierung sind dies jedoch vorteilhafterweise etwa zwanzig Register, so daß für den in dem Komparator 27 vorgenommenen Pegelvergleich zwischen dem Vergleichssignal und dem verzögerten Fernsehsignal dieses um zwanzig Abtasttakte verzögert.

An einem Ausgang 34 des Komparators 27 erscheint dann das Vergleichssignal. Dieses Signal ist auf ein Register 35 geführt, das ebenfalls mittels des Abtasttaktes Clk getaktet ist. Am Ausgang 36 des Registers 35 erscheint dann das auf den Abtasttakt synchronisierte Synchronisations-Signal, welches beispielsweise einem in der Figur 1 nicht dargestellten Phasenregelkreis zugeführt sein kann.

Im folgenden wird die Funktionsweise der in Fig. 1 dargestellten Schaltungsanordnung anhand einiger in dieser Schaltungsanordnung auftauchender und in Fig. 2 über der Zeit dargestellter Signale näher erläutert. Der zeitliche Ausschnitt für die Darstellung der Signale wurde so gewählt, daß in dem Fernsehsignal ausschließlich Horizontal-Synchronisations-Impulse, jedoch keine Vertikal-Synchronisations-Impulse auftreten.

Der in der Fig. 2 dargestellte Kurvenzug A stellt das am Ausgang des Inverters 2 erscheinende tiefpaßgefilterte und invertierte Fernsehsignal dar. Dieses Fernsehsignal ist tatsächlich ein digitales Signal und ist in der Fig. 2 aus Gründen der Darstellung in analoger Form skizziert. Da das Signal invertiert ist, erscheinen die Horizontal-Synchronisations-Impulse als Maxima in dem Kurvenverlauf. Der in der Fig. 2 dargestellte zeitliche Abschnitt t1 bis t4 stellt eine Austastlücke dar, in der in dem Zeitraum t2 bis t3 ein Horizontal-Synchronisations-Signal erscheint. Die Zeit t4 bis t5 ist die aktive Zeit des Fernsehsignals, also diejenige Zeit, in der die Bildinformation übertragen wird. In dem in der Fig. 2 dargestellten Beispiel ist die Bildinformation ein trapezförmiges Helligkeitssignal.

In dem mittels des Komparators 3, des Multiplexers 4 und des Registers 5 aufgebauten Pegel-Detektors wird das in Kurvenzug A dargestellte Signal auf seine Maxima hin untersucht. Dazu ist das Signal dem Komparator 3 zugeführt, welcher dieses Signal mit dem Ausgangssignal des Registers 5 vergleicht. Das Register 5 wiederum wird abhängig davon, ob sein Ausgangssignal größer ist oder das gerade anliegende Fernsehsignal entweder mit dem Fernsehsignal geladen oder mit seinem Ausgangssignal. Dies geschieht dabei in der Weise, daß das Register 5 nur dann mit einem neuen Wert des gerade anliegenden Fernsehsignals geladen wird, wenn dieses einen größeren Wert hat als das zuletzt in dem Register 5 abgespeicherte Signal. Der Inhalt des Registers 5 wird also ständig auf den bisher aufgetretenen Maximalwert des Fernsehsignals nachgeführt. Mittels des Signales B, dessen Impuls jeweils kurz vor Beginn der Austastlücken erscheinen, wird das Register 5 zu Beginn jedes Zeitintervalls wieder auf Null zurückgesetzt, so daß die Messung und Abspeicherung der Maximalwerte von neuem beginnt. Das Signal B kann beispielsweise einem in der Figur 1 nicht dargestellten, nachgeschalteten digitalen Phasenregelkreis entnommen werden.

Das Ausgangssignal des Pegeldetektors stellt das Extremwert-Signal dar, das in diesem Falle, da das invertierte Fernsehsignal überprüft wird, ein Maximalwert-Signal darstellt. Dieses Signal ist in der Fig. 2 mittels des Kurvenzuges E dargestellte.

In Fig. 2 folgt zu Beginn der Kurvenzüge das Signal E dem invertierten Fernsehsignal A bis zu dem Maximum des ersten Horizontal-Synchronisations-Impulses, da bis dahin das Fernsehsignal in seinem Pegel ansteigt oder konstant bleibt, jedoch sich nicht verringert. Dies geschieht in der Weise, daß während der Zeiten, in denen das an dem ersten Eingang 6 des Komparators anliegende Fernsehsignal größer ist als das an seinem zweiten Eingang 12 anliegende Ausgangssignal des Registers 5, der Komparator ein Schaltsignal abgibt, das dem Schalteingang 14 des Multiplexers 4 zugeführt ist. Während dieser Zeiten ist der Mulitplexer 4 auf einen ersten Eingang 7 geschaltet und es werden laufend neue Werte des Fernsehsignals in das Register 5 geladen. Während der Zeiten, in denen das Signal konstant ist, sind die beiden an den Eingängen 6 und 12 des Komparators anliegenden Werte gleich und der Mulitplexer 4 ist auf seinen zweiten Eingang 11 geschaltet, so daß der Speicherinhalt des Registers 5 immer wieder neu in dieses eingelesen wird.

Mit Beginn der Rückflanke des ersten Horizontal-Synchronisations-Impulses nimmt das laufende Signal, das am Eingang 6 des Multiplexers anliegt, kleinere Werte an als das in dem Register 5 abgespeicherte Signal, das am Eingang 12 des Komparators anliegt. In diesem Falle bleibt der Multiplexer 4 auf seinen zweiten Eingang 11 geschaltet, so daß der Speicherinhalt des Registers immer wieder neu eingelesen wird. Das Register bleibt also auf dem bisherigen Maximalwert des laufenden Zeitintervalls stehen. In dem in der Fig. 2 dargestellten Beispiel bleibt dieser Wert des Registers 5 erhalten, bis das Register 5 mittels des Signales B zurückgesetzt wird. Zu diesem Zeitpunkt beginnt ein neues Zeitintervall. Es wiederholt sich dann der für die erste Austastlücke beschriebene Vorgang.

In der Figur 2 ist ferner ein Signal D dargestellt, daß das Vergleichssignal darstellt. Die Signale D und E sind ebenso wie die Signale A und C digitale Signale und in der Figur nur zwecks Übersichtlichkeit in analoger Form dargestellt. Das Vergleichssignal wird in der in Fig. 1 dargestellten Schaltungsanordnung von dem Addierer 21 geliefert. Dieses Vergleichssignal ist das um einen bestimmten Anteil verringerte Extremwertsignal E.

In der in Fig. 1 dargestellten Schaltungsanordnung wird dieses Signal, das mittels des Registers 25 auf den Abtasttakt synchronisiert ist, in dem Komparator 27 mit dem verzögerten Fernsehsignal verglichen, das dem Eingang 33 des Komparators 27 zugeführt ist. In der Darstellung in Fig. 2 ist dieses verzögerte Fernsehsignal mit dem Kurvenzug C dargestellt. Der Komparator 27 liefert während derjenigen Zeiten ein Ausgangssignal, in denen das seinem Eingang 33 zugeführte, verzögerte Fernsehsignal einen größeren Pegel aufweist als das seinem ersten Eingang 26 zugeführte Vergleichseignal. Dieses Ausgangssignal des Komparators 27 ist mittels des Registers 25 auf den Abtasttakt synchronisiert. Dieses synchronisierte Signal ist in der Fig. 2 als H_{sync}-Signal dargestellt. Dieses Signal stellt das Synchronisations-Signal dar, mittels dessen nachfolgende Schaltungsanordnungen auf die Horizontalfrequenz des anliegenden Fernsehsignals synchronisiert werden. Im Regelfalle wird vorgesehen sein, einen Phasenregelkreis nachzuschalten.

Anhand der Kurvenzüge in Fig. 2 ist erkennbar, daß für jedes Zeitintervall eine individuelle Feststellung des Extremwertes des Fernsehsignals vorgenommen wird, so daß eventuell von Bildzeile zu Bildzeile schwankende Pegel der Horizontal-Synchronisations-Impulse deren Detektion nicht stören.

Es ist ferner deutlich, daß, sollte in einer Austastlücke hinter dem eigentlichen Horizontal-Synchronisations-Impuls noch eine weitere Störung auftreten, diese nicht zu einem falschen Synchronisationssignal führt, so lange diese Störung keinen höheren Pegel aufweist als der Synchronisationsimpuls selbst.

## Patentansprüche

1. Digitale Schaltungsanordnung zur Detektion von in einem digitalen Fernsehsignal enthaltenen Horizontal- oder Vertikal-Synchronisations-Impulsen, mit einem Pegeldetektor und einem Komparator
dadurch gekennzeichnet, daß das Fernsehsignal dem Pegel-Detektor (3,4,5) zugeführt ist, welcher ein Extremwert-Signal (E) abgibt, das laufend denjenigen bisher in einem Zeitintervall, dessen Dauer dem zeitlichen Abstand zweier aufeinanderfolgender Synchronisations-Impulse entspricht, aufgetretenen Extremwert des Fernsehsignals liefert, der am Ende des Zeitintervalls den Pegel des Synchronisations-Impulses angibt, daß zwischen aufeinanderfolgenden Synchronisations-Impulsen zu einem vorgebbaren Zeitpunkt außerhalb der Austastlücke ein neues Zeitintervall gestartet wird und daß das Extremwert-Signal (E) zur Erzeugung eines Vergleichssignals (D) laufend um einen vorgebbaren Anteil verringert wird und dem Komparator (27) zugeführt ist, welcher während derjenigen Zeiten, in denen der Pegel des um einige Abtastwerte verzögerten Fernsehsignals (C) größer ist als der Pegel des Vergleichssignals (D), ein Synchronisations-Signal abgibt.

2. Digitale Schaltungsanordnung nach Anspruch 1, dadurch gekennzeichnet, daß dem Pegel-Detektor (3,4,5) ein Tiefpaß-Filter (1) vorgeschaltet ist.

3. Digitale Schaltungsanordnung nach Anspruch 2, dadurch gekennnzeichnet, daß der vorgebbare Anteil, um den das Extremwert-Signal zur Gewinnung des Vergleichssignal verringert wird 1/8 bis 1/32, vorzugsweise 1/16, beträgt.

4. Digitale Schaltungsanordnung nach einem der Ansprüche 1 bis 3,
dadurch gekennzeichnet, daß die Zeitintervalle jeweils gegen Ende des aktiven, den Bildinhalt enthaltenden Teils jeder Bildzeile gestartet werden.

5. Digitale Schaltungsanordnung nach einem der Ansprüche 1 bis 4,
dadurch gekennzeichnet, daß der Start der Zeitintervalle mittels eines Zählers vorgenommen wird, welcher in einem der Schaltungsanordnung nachgeschalteten digitalen Phasenregelkreis vorgesehen ist.

6. Digitale Schaltungsanordnung nach einem der Ansprüche 1 bis 5,
dadurch gekennzeichnet, daß das dem Komparator (27) zugeführte Fernsignal um 10 bis 30, vorzugsweise 20 Abtasttakte (CLK) des Fernsehsignals verzögert ist.

7. Digitale Schaltungsanordnung nach einem der Ansprüche 1 bis 6,
dadurch gekennzeichnet, daß in dem Pegel-Detektor (3,4,5) ein mit dem Abtasttakt (CLK) des Fernsehsignals getaktetes Register (5) vorgesehen ist, welches mit jedem Abtasttakt (CLK) mit dem neuen Abtastwert des Fernsehsignals (A) geladen wird, sofern dieser einen größeren Wert hat als der letzte in dem Register gespeicherte Abtastwert und welches ansonsten wieder neu mit dem letzten gespeicherten Wert geladen wird, wobei der Pegelvergleich des letzten gespeicherten Abtastwertes und des neuen Abtastwertes mittels eines Komparators (3) vorgenommen wird.

## Claims

1. A digital circuit arrangement for detecting horizontal or vertical synchronising pulses in a digital television signal, comprising a level detector and a comparator, characterized in that the television signal is applied to the level detector (3, 4, 5) which supplies an extreme value signal (E) which continuously provides that extreme value of the television signal which has hitherto occurred in a time interval whose duration corresponds to the distance with respect to time between two consecutive synchronising pulses, which extreme value indicates the level of the synchronising pulse at the end of the time interval, in that a new time interval is started between consecutive synchronising pulses at a predetermined instant outside the blanking interval, and in that for generating a comparison signal (D) the extreme value signal (E) is continuously reduced by a predeterminable amount and applied to the comparator (27) which supplies a synchronising signal during those periods when the level of the television signal (C) delayed by several sample values is higher than the level of the comparison signal (D).

2. A digital circuit arrangement as claimed in Claim 1, characterized in that the level detector (3, 4, 5) is preceded by a low-pass filter (1).

3. A digital circuit arrangement as claimed in Claim 2, characterized in that the predeterminable amount by which the extreme value signal is reduced to obtain the comparison signal is 1/8 to 1/32, preferably 1/16.

4. A digital circuit arrangement as claimed in any one of Claims 1 to 3, characterized in that the time intervals are started each time by the end of the active part, comprising the picture contents, of each picture line.

5. A digital circuit arrangement as claimed in any one of Claims 1 to 4, characterized in that the time intervals are started by means of a counter which is arranged in a digital phase control circuit following the circuit arrangement.

6. A digital circuit arrangement as claimed in any one of Claims 1 to 5, characterized in that the television signal applied to the comparator (27) is delayed by 10 to 30, preferably 20 sample clocks (Clk) of the television signal.

7. A digital circuit arrangement as claimed in any one of Claims 1 to 6, characterized in that the level detector (3, 4, 5) comprises a register (5) clocked with the sample clock (Clk) of the television signal and at each sample clock (Clk) being charged with the new sample value of the television signal (A) in so far as this value is higher than the sample value which was the last to be stored in the register which is otherwise charged with the last stored value, the levels of the last stored sample value and the new sample value being compared by means of a comparator (3).

## Revendications

1. Montage de circuit numérique pour détecter des impulsions de synchronisation horizontale ou verticale contenues dans un signal de télévision numérique, comportant un détecteur de niveau et un comparateur, caractérisé en ce que le signal de télévision est acheminé au détecteur de niveau (3, 4, 5), qui délivre un signal de valeur extrême (E) qui fournit continuellement la valeur extrême du signal de télévision apparue jusque-là dans un intervalle de temps dont la durée correspond à l'écart dans le temps de deux impulsions de synchronisation successives, cette valeur extrême indiquant, à la fin dudit intervalle de temps, le niveau de l'impulsion de synchronisation, en ce que, dans chaque laps de temps entre des impulsions de synchronisation successives, à un instant prédéterminable qui se trouve à l'extérieur de l'intervalle de suppression, un nouvel intervalle de temps est amorcé et en ce que le signal de valeur extrême (E) pour la production d'un signal de comparaison (D) est réduit continuellement d'une fraction prédéterminable et est acheminé au comparateur (27), qui délivre un signal de synchronisation pendant les intervalles dans lesquels le niveau du signal de télévision (C) retardé de quelques valeurs d'échantillonnage est plus élevé que le niveau du signal de comparaison (D).

2. Montage de circuit numérique selon la revendication 1, caractérisé en ce qu'un filtre passe-bas (1) est installé en amont du détecteur de niveau (3, 4, 5).

3. Montage de circuit numérique selon la revendication 2, caractérisé en ce que la fraction prédéterminable de laquelle le signal de valeur extrême est réduit pour obtenir le signal de comparaison, est de 1/8 à 1/32, de préférence de 1/16.

4. Montage de circuit numérique selon l'une quelconque des revendications 1 à 3, caractérisé en ce que les intervalles de temps sont respectivement amorcés vers la fin de la partie active de chaque ligne d'image à contenu image.

5. Montage de circuit numérique selon l'une quelconque des revendications 1 à 4, caractérisé en ce que le début des intervalles de temps est lancé par un compteur, qui est monté dans une boucle à phase asservie numérique installée en aval du montage de circuit.

6. Montage de circuit numérique selon l'une quelconque des revendications 1 à 5, caractérisé en ce que le signal de télévision acheminé au comparateur (27) est retardé de 10 à 30, de préférence, de 20 valeurs d'échantillonnage (Clk) du signal de télévision.

7. Montage de circuit numérique selon l'une quelconque des revendications 1 à 6, caractérisé en ce qu'il est prévu dans le détecteur de niveau (3, 4, 5) un registre (5) cadencé par la cadence d'échantillonnage (Clk) du signal de télévision, qui est chargé à chaque cadence d'échantillonnage (Clk) de la nouvelle valeur d'échantillonnage du signal de télévision (A) aussi longtemps que celui-ci a une valeur supérieure à la dernière valeur d'échantillonnage mémorisée dans le registre et qui sinon est chargé à nouveau de la dernière valeur mémorisée, la comparaison des niveaux de la dernière valeur d'échantillonnage mémorisée et de la nouvelle valeur d'échantillonnage étant effectuée au moyen d'un comparateur (3).
